# EUROPÄISCHE PATENTSCHRIFT

(11) **EP 2 699 524 B1**
(45) Veröffentlichungstag und Bekanntmachung des Hinweises auf die Patenterteilung: **24.08.2016**
(21) Anmeldenummer: 12721402.1
(22) Anmeldetag: 23.04.2012
(51) Int. Cl.: C04B 7/43, C04B 7/60

(54) **VERFAHREN ZUR BEHANDLUNG UND VERWERTUNG VON BYPASS-STÄUBEN AUS DEM ZEMENTHERSTELLUNGSPROZESS**
METHOD FOR PROCESSING AND UTILIZING BYPASS DUSTS OBTAINED DURING THE PRODUCTION OF CEMENT
PROCÉDÉ POUR LE TRAITEMENT ET L'UTILISATION DE POUSSIÈRES DE DÉRIVATION PROVENANT DU PROCESSUS DE PRODUCTION DE CIMENT

(30) Priorität: 21.04.2011 AT 5772011
(43) Veröffentlichungstag der Anmeldung: 26.02.2014
(73) Patentinhaber: Holcim Technology Ltd., 8645 Rapperswil-Jona (CH)
(72) Erfinder: SIPPLE, Ernst-Michael, A-1030 Wien (AT); MADERO, Carlos, Enrique, Alzate, SK-040 01 Kosice (SK); SZABADO , Peter, SK-841 04 Bratislava (SK); VAJANSKY, Michal, SK-831 06 Bratislava (SK); SVARC, Viktor, SK-841 08 Bratislava (SK); KOGLBAUER, Gerald, A-9184 St. Jakob im Rosental (AT)
(74) Vertreter: Keschmann, Marc
(86) Internationale Anmeldenummer: PCT/AT2012/000109
(87) Internationale Veröffentlichungsnummer: WO 2012/142638

(56) Entgegenhaltungen:
- WO-A1-2012/024511
- US-A1- 2003 061 972
- US-A1- 2009 283 016
- R:W:PETERS, L.SHEM: "Separation of Heavy Metals: Removal from Industrial Wastewaters and contaminated Soil", ENGINEERING FPOUNDATION INTERNATIONAL CONFERENCE ON "EMERGING SEPARATION TECHNOLOGIES FOR METALS AND FUELS; PALM BEACH, 4. März 1993 (1993-03-04), Seiten 1-62, XP002682708,
- STEPHEN MCANALLYA ET AL: "Nickel Removal from a Synthetic Nickel-Plating Wastewater Using Sulfide and Carbonate for Precipitation and Coprecipitation", SEPARATION SCIENCE AND TECHNOLOGY, DEKKER, NEW YORK, NY, US, Bd. 19, Nr. 2-3, 1. Januar 1984 (1984-01-01), Seiten 191-217, XP009162124, ISSN: 0149-6395

## Beschreibung

Die Erfindung betrifft ein Verfahren zur Behandlung und Verwertung von Bypass-Stäuben aus dem Zementherstellungsprozess.

Die US 2009/283016 A1 offenbart ein Verfahren zur Behandlung und Verwertung von Bypass-Stäuben aus dem Zementherstellungsprozess, wobei der Bypass-Staub mit einer wässrigen Phase in Kontakt gebracht und vermischt wird, vorhandene Schwermetalle abgetrennt werden und Calcium ausgefällt wird.

Hauptbestandteile von Bypass-Stäuben sind CaO, Al₂O₃, SiO₂ und Fe₂O₃ sowie kondensierte Verunreinigungen, wie Na₂O, K₂O, SO₃ und Cl.

Bei der Zementherstellung werden die heißen Abgase des Brennofens zur Vorwärmung des Rohmehls benutzt. Infolge der Abkühlung kondensieren die im Abgas enthaltenen dampfförmigen Bestandteile, wie Na₂O, K₂O, SO₃ und Cl und werden mit dem Rohmehl wieder in den Brennofen zurückgeführt. Dadurch entsteht bei der Zementherstellung ein interner Kreislauf von solchen Stoffen, die im Brennofen verdampfen und bei der Vorwärmung des Rohmehls aus dem Abgas auskondensieren. Mit dem Rohmehl oder den Brennstoffen werden ständig neue unvermeidbare Bestandteile eingebracht, sodass die beschriebenen Kreisläufe immer mehr angereichert werden, wenn man nicht ständig einen Teil der heißen Abgase des Brennofens abziehen und damit auch anteilig die verdampften Verunreinigungen aus dem Herstellungsprozess entfernen würde. Dieser Teilgasstrom wird gekühlt und entstaubt und dieser Staub wird im folgenden als Zementofengasbypassstaub, kurz Bypass-Staub bezeichnet, wobei die unvermeidbaren Bestandteile auf den Staubkörnern kondensieren und mit dem Staub aus dem Abgas abgeschieden werden. Der dabei anfallende Bypass-Staub kann je nach Zusammensetzung und je nach der gewünschten Zementqualität als Zementzumahlstoff verwendet werden.

Mit dem Einsatz von alternativen Brennstoffen oder bei Verwendung bestimmter Rohstoffe im Zementherstellungsprozess und der damit verbundenen Einbringungen von zusätzlichen unvermeidbaren Bestandteilen entstehen ansteigende Mengen an Bypass-Stäuben, die ohne aufwendige Aufbereitung nicht zur Gänze verwendbar sind und deshalb bei vielen Zementherstellern teilweise deponiert werden, was jedoch mit einer erheblichen Umweltbelastung verbunden ist. Die Deponierung ist auch insofern nachteilig, als damit entsprechend hohe Verluste an bei der Zementherstellung brauchbaren Bestandteilen einhergehen. In aller Regel scheitert eine wirtschaftlich sinnvolle Verwendung der Produkte in der Zementindustrie an zu hohen Alkalien-, Chlorid-, Schwefel- oder Schwermetallgehalten.

Es besteht somit die Aufgabe, den bei der Zementherstellung anfallenden Bypass-Staub aufzubereiten, d.h. die brauchbaren Bestandteile von den Verunreinigungen abzutrennen, um einerseits möglichst viel wiederverwendbares Material zu gewinnen und andererseits die die unvermeidbaren Bestandteile enthaltende Fraktion möglichst klein zu halten.

Zur Lösung dieser Aufgabe sieht die Erfindung ein Verfahren gemäß Anspruch 1 vor. Das Verfahren umfasst die Schritte
a) In-Kontakt-bringen des Bypass-Staubes mit einer wässrigen Phase sowie Vermischen derselben, um eine homogene Aufschlämmung zu erhalten, wobei wasserlösliche Bestandteile des Bypass-Staubes in der wässrigen Phase gelöst werden,
b) Durchführen einer Fest-Flüssig-Trennung, insbesondere einer Vakuumfiltration oder einer Filterpressenfiltration, um die in der Aufschlämmung enthaltenen Feststoffe abzutrennen, wobei eine Sole verbleibt,
c) Abtrennen von in der Sole vorhandenen Schwermetallen und Ausfällen von Calcium, um eine behandelte Sole zu erhalten,
d) Unterwerfen der behandelten Sole einer fraktionierten Kristallisation.

Bevorzugte Weiterbildungen ergeben sich aus den Unteransprüchen.

Insbesondere kann hierbei vorgesehen sein, dass das Verhältnis Bypass-Staub zu wässriger Phase in Schritt a) 1:1 bis 1:2 beträgt.

Bevorzugt wird in Schritt a) HCl beigegeben und mit den anderen Komponenten zu einer homogenen Aufschlämmung vermischt, um den de Gehalt an Alkalien und Halogeniden anzugleichen.

Bevorzugt wird ein erster Abtrennungsschritt gemäß Schritt b) durchgeführt, um eine starke Sole zu erhalten, welche Schritt c) zugeführt wird, wobei die im ersten Abtrennungsschritt abgetrennten Feststoffe mit Hilfe eines wässrigen Mediums aufgeschlämmt werden, wobei die wasserlöslichen Bestandteile der Feststoffe in der wässrigen Phase gelöst werden, und die so erhaltene Aufschlämmung einem zweiten Abtrennungsschritt unterworfen wird, in dem die in der Aufschlämmung enthaltenen Feststoffe abgetrennt werden und eine schwache Sole verbleibt.

Bevorzugt umfasst der erste und/oder der wenigstens eine weitere Abtrennungsschritt eine Filtration. Besonders bevorzugt wird die Filtration hierbei mit Hilfe einer Filterpresse vorgenommen.

Alternativ kann auch so vorgegangen werden, dass die Fest-Flüssig-Trennung gemäß Schritt b) mittels eines kontinuierlichen Abtrennungsverfahrens durchgeführt wird, wobei die Aufschlämmung und eine wässrige Phase in einer kontinuierlich arbeitenden Abtrennungsvorrichtung, insbesondere einem Bandfilter oder Vakuumbandfilter, im Gegenstrom geführt und in Kontakt gebracht werden. Dabei kann nach dem Durchlaufen eines ersten Abschnitts der kontinuierlichen Abtrennungsvorrichtung eine schwache Sole abgezogen und nach dem Durchlaufen eines weiteren Abschnitts der kontinuierlichen Abtrennungsvorrichtung eine starke Sole abgezogen werden.

Bevorzugt kann weiters vorgesehen sein, dass die nach dem zweiten und/oder jedem weiteren Abtrennungsschritt verbleibende schwache Sole oder Wasser bzw. die aus der kontinuierlichen Abtrennungsvorrichtung abgezogene schwach Sole zum Aufschlämmen des Bypass-Staubes oder des entstehenden Filterkuchens in Schritt a) und/oder zum Auswaschen des sich im ersten oder zweiten Abtrennungsschritt ergebenden Filterkuchens verwendet wird.

Eine bevorzugte Wiederverwendung der verwertbaren Bestandteile der Bypass-Stäube gelingt dadurch, dass die abgetrennten Feststoffe nach einer ggf. erforderlichen Trocknung in den Zementherstellungsprozess rückgeführt werden, insbesondere als Zementzumahlstoff oder als Rohmehlkomponente.

Bevorzugt wird so vorgegangen, dass der Sole im Schritt c) CO₂ oder Carbonate, insbesondere Alkalicarbonate wie beispielsweise Na₂CO₃ oder K₂CO₃ als Fällungsmittel zum Ausfällen von CaCO₃ zugesetzt wird. CO₂-hältiges Abgas kann hierbei mit Vorteil aus dem Brennofen entnommen und in Schritt c) als Fällungsmittel eingesetzt werden. Alternativ kann diese Fällung mit anderen Chemikalien durchgeführt werden insoweit diese schwerlösliche Calciumsalze bilden. Zum Beispiel kann eines dieser schwerlöslichen Salze ein Calcium-oxalat sein.

Um auch die gefällten Ca-Salze im Rahmen des Zementherstellungsprozesses wiederverwerten zu können, wird bevorzugt so vorgegangen, dass das in Schritt c) ausgefällte Ca-Salz der Aufschlämmung in Schritt a) zugegeben und in Schritt b) als Feststoff abgetrennt wird.

Bevorzugt erfolgt die Abtrennung von Schwermetallen mittels Sulfidfällung. Als Fällungsmittel für die Sulfidfällung wird hierbei mit Vorteil Na₂S eingesetzt. Es hat sich herausgestellt, dass es bei der Verwendung von Na₂S nicht erforderlich ist, vorher ein Oxidationsmittel zuzusetzen (zum Beispiel Eisensulfat). Diese Oxidation dient bei herkömmlichen Verfahren dazu, niedervalente Metalle zu oxidieren, da es bekannt ist, dass die Sulfide von höhervalenten Metallen schwerer löslich sind und damit leichter ausgefällt werden können. Versuche haben jedoch gezeigt, dass das Weglassen dieser oxidativen Reaktion überraschender Weise keine wesentliche Löslichkeitserhöhung der niedervalenten Metallsalze zur Folge hat. Das sich aufgrund des Weglassens der Oxidation ergebende einstufiges Verfahren (direktes Fällen) stellt im Vergleich zu den herkömmlichen zweistufigen Verfahren (Oxidieren und Fällen) eine erhebliche Vereinfachung dar.

Mit Vorteil wird weiters so vorgegangen, dass das Ausfällen von Ca nach dem Ausfällen der Schwermetalle erfolgt. Nach der Fest-Flüssig-Trennung enthält die Sole in der Regel nämlich einen messbaren und signifikanten Anteil von gelöstem Calciumhydroxid. Der pH-Wert dieser Lösung ist ca. 12, was dem pH-Wert einer gesättigten Calciumhydroxidlösung entspricht. Wenn nun die Sulfidfällung vorgenommen wird, bevor Ca ausgefällt wird, wird die Sulfidfällung in einer gepufferten alkalischen Lösung durchgeführt. Dabei wurde erkannt, dass die SchwermetallFällung in einer mit Kalziumhydroxid gepufferten alkalischen Lösung und ohne vorherige Oxidation niedervalenter Metallsalze in überraschender Weise weitgehend vollständig abläuft. Deshalb erlaubt es die angegebene Verfahrensweise, in einer Bypass-Staub-Sole vorkommende Metalle nahezu quantitativ abzusondern.

Sofern die Bypass-Stäube Lithium enthalten, kann bevorzugt so vorgegangen werden, dass Schritt c) weiters das Ausfällen von Lithium als Li₂CO₃ umfasst, wobei als Fällungsmittel bevorzugt Carbonate verwendet werden die eine größere Löslichkeit als Li₂CO₃ aufweisen. Insbesondere kann diese Fällung mit Na₂CO₃ oder K₂CO₃ durchgeführt werden.

Bevorzugt umfasst Schritt c) nach der Abtrennung von Schwermetallen und ggf. nach dem Ausfällen von Calcium weiters das Zusetzen eines starken Oxidationsmittels von außen, insbesondere H₂O₂, bzw. die Erzeugung von oxidierenden Bedingungen innerhalb der Lösung, um Sulfid-Anionen (S²⁻) zu entfernen. Bei einem Verfahren, bei dem zuerst die Schwermetalle und erst danach Ca ausgefällt wird, kann das starke Oxidationsmittel entweder unmittelbar nach dem Ausfällen der Schwermetalle oder nach dem Ausfällen von Ca zugegeben werden. Da das Einleiten von CO₂ den pH-Wert ins Saure verschiebt, ist es jedoch vorzuziehen, die Zerstörung der Sulfid-Anionen direkt nach der Schwermetallfällung durchzuführen. Es wurde aber herausgefunden, dass der Niederschlag von Kalzium selbst in der hochkonzentrierten Alkalisalzlösung der Bypassstaubsole quantitativ verläuft, insbesondere an einem alkalischen pH von 12 (also auch vor der Sulfidzerstörung) und auch nach der Neutralisation.

Bei einem Verfahren, bei dem zuerst die Schwermetalle und erst danach Ca ausgefällt wird, kann der Schwermetallniederschlag vor dem Calciumcarbonatniederschlag abgetrennt werden. Es wurde allerdings festgestellt, dass der Schwermetallniederschlag nicht vor dem Calciumcarbonatniederschlag abgetrennt werden muss. Im Gegenteil kann es sogar ein Vorteil sein, beide Niederschläge gleichzeitig vorliegen zu haben. Zu diesem Zweck wurde unter Ausnutzung der physico-chemischen Eigenschaften der Schwermetall- und Calciumcarbonatniederschläge in der Bypassstaubsole ein darauf abgestimmten Separationsprozess entwickelt. Es konnte nämlich festgestellt werden, dass die Schwermetallsalze sehr instabile Aggregate/Agglomerate bilden, welche sich während einer Filtration in Einzelteilchen zerlegen würden. Eine Filtration der Niederschläge wird daher generell als weniger bevorzugt betrachtet.

Ein Vergleich der Sedimentationgeschwindigkeiten von Schwermetallniederschlägen und Calciumcarbonatniederschlägen zeigte, dass die Schwermetalle schneller sedimentieren. Darüber hinaus wurde festgestellt, dass eine Sedimentation einer Suspension, in der beide Niederschläge vorliegen, schneller abläuft als in den "getrennten" Suspensionen (in denen eine Sedimentation nach der anderen durchgeführt wird). Es wurde beobachtet, dass die gefällten Schwermetallsulfide stark agglomerieren, was auf ihre hohe Oberflächenladung schließen lässt. Diese Salze wirken daher wie "Sedimentationshilfstoffe". Die physico-chemische Erklärung ist, dass die "geladenen" Schwermetallniederschläge als Flockulationsmittel für die Carbonatniederschläge agieren und dann die "gemischten" Agglomerate/Aggregate schwerer (größer) werden und schneller sedimentieren als die getrennten Suspensionen.

Folgende Verfahrensweise ist daher bevorzugt: Zuerst wird die Schwermetallfällung durchgeführt und dann wird ohne fest-flüssig Trennung und vor oder nach der Natriumsulfid-Zerstörung die Karbonatfällung vorgenommen. Diese Suspension wird dann durch Co-Sedimentation von Metallsulfiden und Calciumkarbonaten in eine flüssige und eine feste Phase separiert.

Bevorzugt wird am Ende von Schritt c) eine starke Säure, insbesondere HCl zugesetzt, um den pH-Wert abzusenken. Dieser Schritt hat die folgenden Vorteile. Der pH-Wert wird auf einen neutralen Wert (ungefähr 7-8) abgesenkt, sodass aus der alkalischen Lösung eine einfache gesättigte Salzlösung wird. Weiters wird ein Überschuss des Oxidationsmittels H₂O₂ zerstört. Dies stellt eine "chemische Vorbereitungsstufe" dar, um die nachfolgende Kristallisation zu vereinfachen. Es wurde nämlich erkannt, dass die Zerstörung von H₂O₂ dazu führt, dass die Lösung während der Kristallisation (im eventuellen Unterdruck oder beim Aufheizen) nicht stark schäumt. Dieses Schäumen würde wegen der Gasbildung der H₂O₂ Zerstörung einen Zeitverlust im Kristallisationsprozesses bedeuten. Außerdem wird durch die Zugabe von HCl ausgeschlossen, dass sich etwaige Peroxyde oder andere oxidierte Verbindungen aus dem verbleibenden Oxydationsmittel bilden können. Die Verfahrensweise ist dementsprechend sicherer als ohne diesen Neutralisationsschritt. Schließlich wurde erkannt, dass in der großtechnischen Anlage Werkstoffe ausgewählt werden können, die sonst durch das starke Oxidationsmittel zerstört würden. Die Salzsäure zur Neutralisation der Lösung wurde speziell ausgewählt, da der Lösung damit nur Chlorid-Ionen zugefügt werden, wodurch eine Verunreinigung der Lösung mit anderen Anionen vermieden wird.

Bevorzugt wird Abwärme aus dem Zementherstellungsprozess, insbesondere aus dem Vorwärmer oder dem Klinkerkühler bei der fraktionierten Kristallisation zum Verdampfen der behandelten Sole in Schritt d) verwendet. Die Abwärme aus dem Zementherstellungsprozess, insbesondere aus dem Vorwärmer oder dem Klinkerkühler kann ggf. auch zur Trocknung des in Schritt d) erhaltenen Salzes verwendet werden.

Insbesondere ist es hierbei günstig, wenn die Abwärme aus dem Zementherstellungsprozess, insbesondere dem Vorwärmer oder dem Zementkühler einer Dampferzeugung zugeführt wird und der Dampf zum Erwärmen und Verdampfen der behandelten Sole in Schritt d) verwendet wird, wobei das verdampfte Wasser der Sole zumindest teilweise der Dampferzeugung zugeführt wird. Als Wärmeübertragung kann zusätzlich auch ein Wärmeträgeröl Verwendung finden.

Eine Wiederverwendung des Prozesswassers gelingt bevorzugt dadurch, dass das in Schritt d) verdampfte Wasser der Sole zumindest teilweise zum Aufschlämmen der Bypass-Stäube und/oder zum Aufschlämmen oder Auswaschen der in den verschiedenen Abtrennungsschritten abgetrennten Feststoffe verwendet wird.

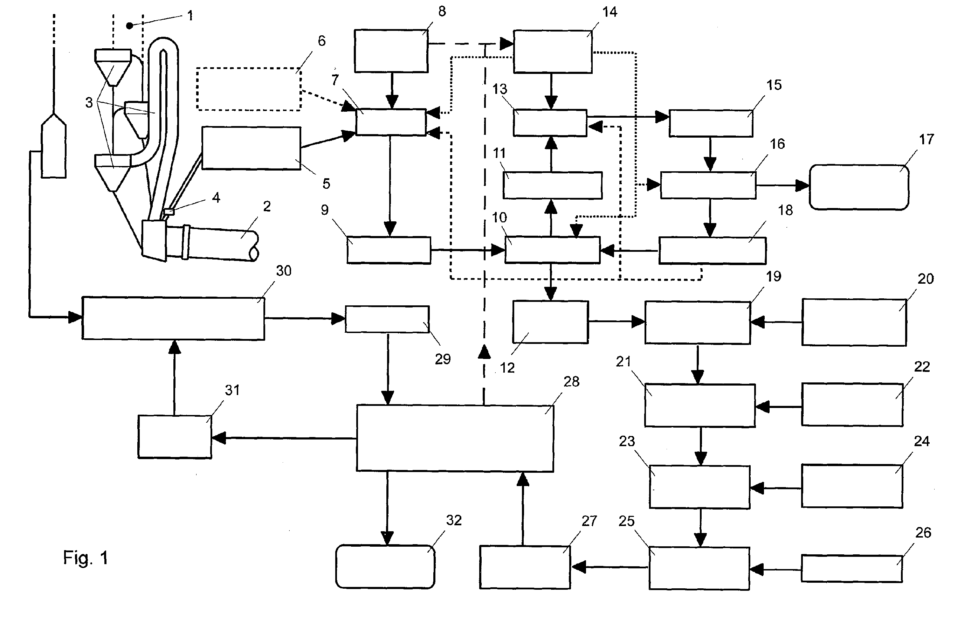

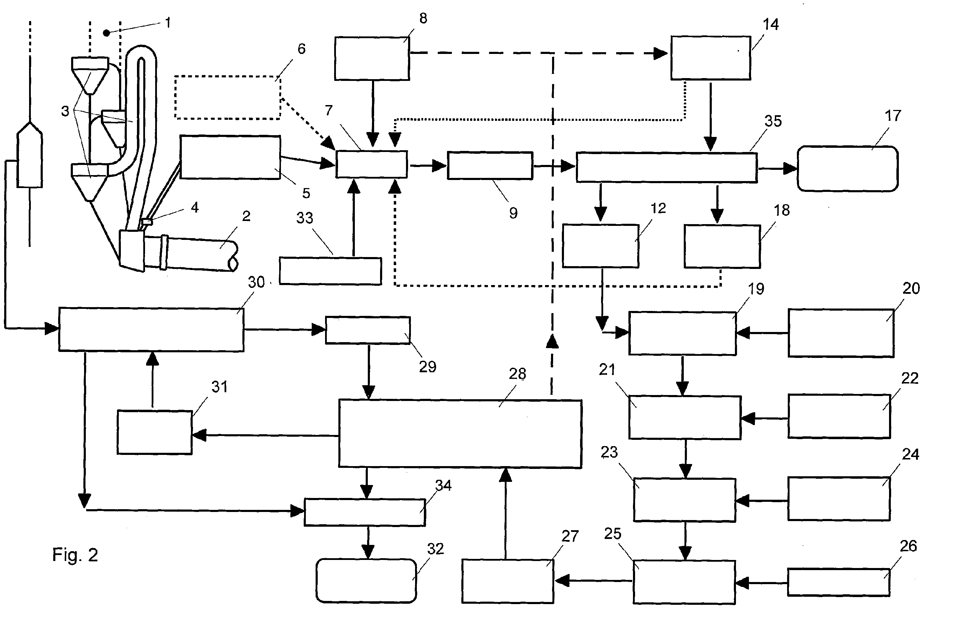

Die Erfindung wird nachfolgend anhand von in der Zeichnung schematisch dargestellten Ausführungsbeispielen näher erläutert. In dieser zeigen Fig. 1 ein erstes Ausführungsbeispiel und Fig. 2 ein abgewandeltes Ausführungsbeispiel.

In Fig. 1 ist ein Zementherstellungsprozess schematisch mit 1 bezeichnet und weist einen Drehrohrofen 2 sowie ein an das Aufgabeende des Drehrohrofens 2 angeschlossenes Vorkalzinator- bzw. Vorwärmersystem 3 auf. An der schematisch mit 4 bezeichneten Stelle werden dem Zementherstellungsprozess Bypass-Stäube entnommen und in einem Silo 5 aufbewahrt. In einem weiteren Silo 6 werden ggf. an anderer Stelle des Zementherstellungsprozesses entnommene Stäube gelagert. Gemäß Schritt a) des erfindungsgemäßen Verfahrens werden die Stäube aus dem Silo 5 bzw. 6 einer Mischvorrichtung 7 zugeführt, in der die Stäube mit einer wässrigen Phase und/oder schwacher Alkalisole, die in einem Tank 8 und 14 bzw. 18 gelagert ist, in Kontakt gebracht sowie intensiv vermischt, um eine homogene Aufschlämmung zu erhalten. Optional kann in den in der Mischvorrichtung 7 stattfindenden Löseprozess Salzsäure zugegeben werden, um den Gehalt an Alkalien und Halogeniden anzugleichen. Mit 9 ist schematisch ein Extraktionsschritt bezeichnet, in dem die löslichen Bestandteile der Aufschlämmung aus den festen Bestandteilen ausgewaschen und in der wässrigen Phase gelöst werden. Die Aufschlämmung wird einer Filterpresse 10 zugeführt, indem der Schritt b) des erfindungsgemäßen Verfahrens durchgeführt wird. Hierbei werden die in der Aufschlämmung enthaltenen Feststoffe abgetrennt, wobei ein Filterkuchen 11 erhalten wird und eine starke Alkalisole 12 verbleibt. Der Filterkuchen 11 wird in der Folge in der Mischvorrichtung 13 mit Hilfe von Prozesswasser 14 und/oder schwacher Alkalisole aufgeschlämmt, wobei ein weiterer Extraktionsschritt 15 durchgeführt wird, indem die im ersten Abtrennungsschritt im Filterkuchen verbliebenen löslichen Bestandteile ausgewaschen werden. In einer anschließenden weiteren Filterpresse 16 werden die festen Bestandteile in einem zweiten Abtrennungsschritt abgetrennt, und es wird ein Filterkuchen 17 erhalten, wobei eine schwache Alkalisole 18 verbleibt. Der Filterkuchen 17 wird in der Folge ggf. getrocknet und kann dem Zementherstellungsprozess 1 als Rohmehlkomponente oder als Zementzumahlstoff rückgeführt werden.

Die schwache Alkalisole 18 wird der Filterpresse 10 zugeführt, sodass die in der schwachen Sole 18 enthaltenen gelösten Bestandteile schließlich in der starken Sole 12 enthalten sind.

Die starke Alkalisole 12 wird gemäß Schritt c) des erfindungsgemäßen Verfahrens einer Ausfällung 19 von Calcium unterworfen, wobei das Fällungsmittel z.B. von CO₂ 20 gebildet ist. Hierbei fällt das schwerlösliche Calcium-Salz in Sedimentationstanks aus und das ausgefällte Calcium wird abgetrennt. In einem weiteren Schritt 21 werden Schwermetalle aus der Alkalisole ausgefällt, wobei dies unter Zugabe von Sulfiden 22, insbesondere Na₂S erfolgt. Die Ausfällung erfolgt wiederum in Sedimentationstanks, wobei die ausgefällten Schwermetalle abgetrennt werden. Alternativ kann die Schwermetallfällung auch vor der Ca-Fällung erfolgen. In einer Verfahrensvariante können die ausgefällte Schwermetalle und die ausgefällten Calciumsalze auch gemeinsam abgetrennt werden.

Anschließend werden Sulfidanionen im Schritt 23 durch Zugabe oder Erzeugung eines starken Oxidationsmittels 24 oxidiert. Weiters wird in einem Schritt 25 der pH-Wert durch Zugabe einer starken Säure 26, insbesondere HCl abgesenkt.

Es resultiert eine behandelte, gereinigte Sole 27, die einer fraktionierten Kristallisation 28 unterzogen wird. Zum Erwärmen und Verdampfen der Sole wird Wasserdampf 29 herangezogen, der mit Hilfe von Abwärme 30 aus dem Vorwärmerabgas oder aus der Klinkerkühlerabluft erzeugt wird. Zur Erzeugung des Wasserdampfs 29 wird das verdampfte Wasser 31, sprich Brüdenwasser, aus der fraktionierten Kristallisation 28 herangezogen. Das Brüdenwasser aus der fraktionierten Kristallisation 28 kann, wie mit strichlierter Linie angedeutet, weiters auch als Prozesswasser 14 wiederverwendet werden.

Aus der fraktionierten Kristallisation 28 resultieren verschiedene Salze 32, wobei es sich vorwiegend um KCl, NaCl und deren Gemische handelt und. KCl kann besonders vorteilhaft in der Düngerindustrie verwendet werden. NaCl sowie die KCl/NaCl-Gemische können beispielsweise als Enteisungsmittel, insbesondere für Verkehrsflächen oder auch in der Aluminiumindustrie Verwendung finden. Optional werden die aus der Kristallisation 28 kommenden Salze einer nicht dargestellten Salztrocknung unterworfen, sodass getrocknete Alkalisalze 32 erhalten werden.

In Fig. 2 wurden für gleiche Verfahrensschritte oder Anlagenteile die selben Bezugszeichen verwendet wie in Fig. 1. Das Ausführungsbeispiel nach Fig. 2 entspricht mit Ausnahme der nachfolgend angeführten Unterschiede dem Ausführungsbeispiel nach Fig. 1.

Abweichend von der Ausbildung gemäß Fig. 1 wird beim Verfahren gemäß Fig. 2 in den in der Mischvorrichtung 7 stattfindenden Löseprozess Salzsäure 33 zugegeben, um den Gehalt an Alkalien und Halogeniden anzugleichen. Mit 9 ist schematisch ein Extraktionsschritt bezeichnet, in dem die löslichen Bestandteile der in der Mischvorrichtung 7 erhaltenen Aufschlämmung aus den festen Bestandteilen ausgewaschen und in der wässrigen Phase gelöst werden. Die Aufschlämmung wird anschließend einem Vakuumbandfilter 35 zugeführt. Im Vakuumbandfilter werden die Aufschlämmung und Prozesswasser (aus 14) im Gegenstrom zueinander geführt. Nach einem in Transportrichtung der Aufschlämmung ersten Abschnitt des Vakuumbandfilter wird eine starke Sole 12 abgezogen, die wie in Fig. 1 einer Behandlung unterworfen wird.

Schließlich werden die aus der Kristallisation 28 kommenden Salze einer Salztrocknung 34 unterworfen, sodass getrocknete Alkalisalze 32 erhalten werden.

Die wichtigsten physikalischen und chemischen Reaktionen, die bei den vorliegenden Ausführungsbeispielen genutzt werden können, werden im Folgenden beschrieben:

### Bildung von Kalkhydrat

Die wichtigste chemische Reaktion ist die Umwandlung des freien Kalks der Bypass-Stäube zu Kalkhydrat. Die Reaktion ist stark exotherm und führt zu einer schnellen Erhitzung der Mischung. Aus Sicherheitsgründen ist es notwendig, den Staub in das Wasser und nicht umgekehrt zu geben, da es in diesem Fall zu einer Staubexplosion kommen kann. Die chemische Gleichung für diese Reaktion lautet wie folgt:

CaO + H₂O → Ca (OH)₂ ΔH = -62,8 kJ/mol

Neben dieser Reaktion kann auch die Reaktion von gut löslichen Hydroxiden mit gut löslichen Calziumsalzen, wie beispielsweise CaCl₂ zu Kalkhydrat führen. Das Reaktionsgleichgewicht wird durch das Ausfällen von Kalkhydrat auf die Seite der Produkte verschoben.

CaCl₂ + Ba(OH)₂ → Ca(OH)₂↓ + BaCl₂

Kalkhydrat ist eine zwar sehr starke, jedoch nur sehr schwach lösliche Lauge. Durch den in der Sole enthaltenen Salzgehalt steigt die Löslichkeit von Kalkhydrat an ("Einsalzeffekt"), wodurch sich ein pH-Wert der Sole von ungefähr 12-13 einstellt.

### Sekundärreaktionen von Kalkhydrat

Eine Reihe von Metallen und Schwermetallen bilden bei pH-Werten von > 7 schwerlösliche Hydroxide. Das bedeutet, dass der Großteil der Schwermetalle durch das Kalkhydrat in der Aufschlämmung gebunden wird. Nur die Alkalimetalle Natrium und Kalium sowie Barium und Strontium werden vom Kalkhydrat nicht eingefangen. Es ist bevorzugt, dass die Reinigung der Salze aus der Sole bereits an diesem Punkt des Verfahrens erfolgt. Andererseits ist es nicht möglich, die Schwermetalle aus den Bypass-Stäuben mit dieser Art der Behandlung zu eliminieren.

### Limitierung der Löslichkeit von Gips

Kalkhydrat ist löslicher als Gips (CaSO₄), weshalb aufgrund des Lösungsgleichgewichts in dem gemischten System Calciumsulfat-Calciumhydroxid-Wasser (t = 25°C), die Löslichkeit von Calciumsulfat deutlich herabgesetzt ist. Die Konzentration des gelösten Calciumsulfates beträgt ungefähr 1,4 mMol pro Liter, was weniger als einem Drittel der normalerweise zu erwartenden Konzentration entspricht.

### Sulfatfällung

### Gipsbildung durch Fällung

Leichter lösliche Sulfate reagieren mit Kalkhydrat unter Ausbildung von Gips. Hierbei gibt es zwei verschiedene Reaktionsprinzipien, nämlich die einfache und die doppelte Fällung.

### Einfache Fällung

Eine typische Einzelfällungsreaktion tritt zwischen Alkalisulfaten und gelösten Kalkhydraten auf:

Ca(OH)₂ + K₂SO₄ → CaSO₄↓ + 2 KOH

Diese Reaktionsart ist der Grund dafür, dass der pH bei Werten von > 7 gehalten wird, auch nach der Fällung des gelösten Kalkhydrats als Kalkstein.

### Doppelfällungsreaktion

Eine typische Doppelfällungsreaktion findet zwischen gut löslichen Sulfaten und gelösten Kalkhydraten unter Ausbildung von schlecht löslichen Hydroxiden statt:

Ca(OH)₂ + MgSO₄ → CaSO₄↓ + Mg(OH)₂↓

Diese Reaktionsart ist der Grund dafür, dass die Sole im Wesentlichen kein Magnesium enthält, auch wenn der Magnesiumgehalt im Staub hoch ist.

### Gipsbildung durch Redox-Reaktionen

Manchmal ist Calciumsulfit im Staub vorhanden, der aufgrund seiner Instabilität im Wasser sofort mit Calciumsulfat zu reagieren beginnt. Hierbei gibt es im Wesentlichen zwei Reaktionsprinzipien, nämlich die Disproportionierung und die Oxidation.

### Disproportionierung von Calciumsulfit

Die Disproportionierung findet normalerweise statt auch wenn kein Oxidationsmittel zugegen ist:

4 CaSO₃ → 3 CaSO₄ + CaS

### Oxidationen

In Anwesenheit von Oxidationsmitteln wird Gips direkt entweder aus Calciumsulfit oder aus Calciumsulfid gebildet:

2 CaSO₃ + O₂ → 2 CaSO₄

CaS + 2 O₂ → CaSO₄

### Fällung durch Gips

Spuren von Gips lösen sich und liefern Sulfationen, die für die Fällung von Barium, Strontium und Blei von größter Bedeutung sind. Die genannten Metalle werden also als ihre Sulfate ausgefällt.

### Auflösen der löslichen Alkalichloride

Die Chloride von Natrium und Kalium bleiben von der Anwesenheit von freiem Kalk unbeeinflusst. Weiters wird zu ihrer Lösung ein Teil der Energie aufgewendet, die bei der Bildung von Kalkhydrat frei wird:

NaCl + n H₂O → [Na⁺ + Cl⁻] x n H₂O ΔH = + 3,8 kJ/mol

KCl + n H₂O → [K⁺ + Cl⁻] x n H₂O ΔH = + 13,0 kJ/mol

### Karbonatfällung von Kalkhydrat

Eine der Reaktionen bei der Nachbehandlung der Sole ist die Entfernung des gelösten Kalkhydrats durch eine Karbonatfällung. Der einfachste Weg ist direktes Einblasen von CO₂-reichem Gas in die Sole. Die Reaktionsgleichung lautet wie folgt:

CO₂ + OH⁻ → HCO₃⁻

2 Ca(OH)₂ + 2 HCO₃⁻ → 2 CaCO3↓ + 2 H₂O + 2OH⁻

### Sulfidfällung von Schwermetallen

Die meisten Schwermetalle formen sehr schwer lösliche Sulfide aus. Daher ist die Sulfidfällung ein stabiler und sicherer Weg Schwermetalle selbst in Spuren zu entfernen. Das Reagenz für die Fällung ist entweder gasförmiges H₂S oder eine Lösung von Na₂S. Im ersten Fall ist das Zudosieren einigermaßen schwierig, weshalb die Verwendung einer Na₂S-Lösung praktikabel ist. Die prinzipielle Reaktion der Sulfidfällung ist im Folgenden angegeben, wobei "Me" jegliches Schwermetall bezeichnet:

2 Me⁺ + Na₂S → Me₂S↓ + 2 Na⁺

Me²⁺ + Na₂S → MeS↓ + 2 Na⁺

2 Me³⁺ + 3 Na₂S → Me₂S₃↓ + 6 Na⁺

### Nebenreaktionen der Sulfidfällungen

Das Sulfidion ist ein stark reduzierendes Reagenz, wobei die Oxidation des Sulfidions im Vergleich zu sauren oder neutralen Bedingungen in alkalischer Umgebung beim Sulfation endet:

S²⁻ + 8 OH⁻ → SO₄²⁻ + 4 H₂O + 8 e⁻

Das hohe Reduktionspotenzial der Oxidationshalbreaktionen führt zur Reduktion von oxidierten Metallionen wie beispielsweise Cr⁶⁺, welches in der Folge wiederum zu Cr³⁺ reduziert wird.

### Nachbehandlungsreaktionen

### Entfernung von überschüssigen Sulfiden

Aufgrund der Notwendigkeit, den pH-Wert der Sole abzusenken, muss der Überschuss an Sulfiden vor der Zugabe von Säure entfernt werden. Dies wird in einfacher Weise durch Oxidation mit starken Oxidationsmitteln wie beispielsweise H₂O₂ durchgeführt. Die größten Vorteile von H₂O₂ sind dessen harmlose Zerfallsprodukte, nämlich Wasser und Sauerstoff. Die prinzipielle Oxidationsreaktion lautet wie folgt:

S²⁻ + 4 H₂O₂ → SO₄²⁻ + 4 H₂O

Diese Reaktion soll bevorzugt durchgeführt werden, da in dem Fall, dass die Sulfide nicht vor der pH-Absenkung entfernt werden, die folgende Reaktion auftritt, die hochgiftigen Schwefelwasserstoff bildet:

S²⁻ + 2 HCl → 2 Cl⁻ + H₂S↑

### pH-Einstellung der Sole

Der pH-Wert beim vorliegenden Verfahren ist von der Bildung des Kalkhydrats bis zur Entfernung des Sulfidüberschusses stark basisch. Dies ist ausgesprochen günstig hinsichtlich der Ausbildung einer passivierenden Schicht als Korrosionsschutz von eisenhaltigen Armaturen, die bei der Durchführung des erfindungsgemäßen Verfahrens zum Einsatz gelangen. Jedoch muss der pH-Wert vor der abschließenden Behandlung in einem Kristallisator zur Erhöhung von Ausbeute und Reinheit der Salze abgesenkt werden.

Bevorzugt wird bei der Absenkung darauf geachtet, dass der Korrosionsschutz der Boilermaterialien nicht wesentlich gemindert wird, insbesondere auf einen pH-Wert von 8-9. Die Absenkung des pH-Wertes wird durch Zugabe von Salzsäure erreicht, da Salzsäure auf die Qualität der letztlich erhaltenen Salzprodukte den geringsten Einfluss hat. Vorhandene Hydroxide und Karbonate werden großteils zu Wasser und CO₂ umgewandelt:

K₂CO₃ + 2 HCl → 2 KCl + H₂O + CO₂↑

## Patentansprüche

1. Verfahren zur Behandlung und Verwertung von Bypass-Stäuben aus dem Zementherstellungsprozess, umfassend die Schritte
a) In-Kontakt-bringen des Bypass-Staubes mit einer wässrigen Phase sowie Vermischen derselben, um eine homogene Aufschlämmung zu erhalten, wobei wasserlösliche Bestandteile des Bypass-Staubes in der wässrigen Phase gelöst werden,
b) Durchführen einer Fest-Flüssig-Trennung, insbesondere einer Vakuumfiltration oder einer Filterpressenfiltration, um die in der Aufschlämmung enthaltenen Feststoffe abzutrennen, wobei eine Sole verbleibt,
c) Abtrennen von in der Sole vorhandenen Schwermetallen und Ausfällen von Calcium, um eine behandelte Sole zu erhalten,
d) Unterwerfen der behandelten Sole einer fraktionierten Kristallisation.

2. Verfahren nach Anspruch 1, **dadurch gekennzeichnet, dass** das Verhältnis Bypass-Staub zu wässriger Phase in Schritt a) 1:1 bis 1:2 beträgt.

3. Verfahren nach Anspruch 1 oder 2, **dadurch gekennzeichnet, dass** in Schritt a) HCl beigegeben wird.

4. Verfahren nach Anspruch 1, 2 oder 3, **dadurch gekennzeichnet, dass** ein erster Abtrennungsschritt gemäß Schritt b) durchgeführt wird, um eine starke Sole zu erhalten, welche Schritt c) zugeführt wird, und dass die im ersten Abtrennungsschritt abgetrennten Feststoffe mit Hilfe eines wässrigen Mediums aufgeschlämmt werden, wobei die wasserlöslichen Bestandteile der Feststoffe in der wässrigen Phase gelöst werden, und die so erhaltene Aufschlämmung wenigstens einem weiteren Abtrennungsschritt unterworfen wird, in dem die in der Aufschlämmung enthaltenen Feststoffe abgetrennt werden und eine schwache Sole verbleibt.

5. Verfahren nach einem der Ansprüche 1 bis 4, **dadurch gekennzeichnet, dass** der erste und/oder der wenigstens eine weitere Abtrennungsschritt eine Filtration umfasst.

6. Verfahren nach Anspruch 5, **dadurch gekennzeichnet, dass** die Filtration mit Hilfe einer Filterpresse vorgenommen wird.

7. Verfahren nach Anspruch 1, 2 oder 3, **dadurch gekennzeichnet, dass** die Fest-Flüssig-Trennung gemäß Schritt b) mittels eines kontinuierlichen Abtrennungsverfahrens durchgeführt wird, wobei die Aufschlämmung und eine wässrige Phase in einer kontinuierlich arbeitenden Abtrennungsvorrichtung, insbesondere einem Bandfilter oder Vakuumbandfilter, im Gegenstrom geführt und in Kontakt gebracht werden.

8. Verfahren nach Anspruch 7, **dadurch gekennzeichnet, dass** nach dem Durchlaufen eines ersten Abschnitts der kontinuierlichen Abtrennungsvorrichtung eine schwache Sole abgezogen und nach dem Durchlaufen eines weiteren Abschnitts der kontinuierlichen Abtrennungsvorrichtung eine starke Sole abgezogen wird.

9. Verfahren nach einem der Ansprüche 4 bis 8, **dadurch gekennzeichnet, dass** die nach dem zweiten und/oder wenigstens einem weiteren Abtrennungsschritt verbleibende bzw. die aus der kontinuierlichen Abtrennungsvorrichtung abgezogene schwache Sole zum Aufschlämmen des Bypass-Staubes in Schritt a) und/oder zum Auswaschen oder Aufschlämmen des sich im ersten oder wenigstens einem weiteren Abtrennungsschritt ergebenden Filterkuchens verwendet wird.

10. Verfahren nach einem der Ansprüche 1 bis 9, **dadurch gekennzeichnet, dass** die abgetrennten Feststoffe nach einer ggf. erforderlichen Trocknung in den Zementherstellungsprozess rückgeführt werden, insbesondere als Zementzumahlstoff oder als Rohmehlkomponente.

11. Verfahren nach einem der Ansprüche 1 bis 10, **dadurch gekennzeichnet, dass** der Sole im Schritt c) ein Fällungsmittel, insbesondere CO₂ oder Carbonate, insbesondere Alkalicarbonate wie beispielsweise Na₂CO₃ oder K₂CO₃, zum Ausfällen von Calciumsalzen, insbesondere CaCO₃, zugesetzt wird.

12. Verfahren nach Anspruch 11, **dadurch gekennzeichnet, dass** CO₂ haltiges Abgas aus dem Brennofen entnommen und in Schritt c) als Fällungsmittel eingesetzt wird.

13. Verfahren nach einem der Ansprüche 1 bis 12, **dadurch gekennzeichnet, dass** das in Schritt c) ausgefällte Calciumsalz der Aufschlämmung in Schritt a) zugegeben und in Schritt b) als Feststoff abgetrennt wird.

14. Verfahren nach einem der Ansprüche 1 bis 13, **dadurch gekennzeichnet, dass** die Abtrennung von Schwermetallen mittels Sulfidfällung erfolgt.

15. Verfahren nach Anspruch 14, **dadurch gekennzeichnet, dass** als Fällungsmittel für die Sulfidfällung Na₂S eingesetzt wird.

16. Verfahren nach einem der Ansprüche 1 bis 15, **dadurch gekennzeichnet**, das Ausfällen von Calciumsalzen, insbesondere CaCO₃, nach dem Ausfällen der Schwermetalle erfolgt.

17. Verfahren nach Anspruch 16, **dadurch gekennzeichnet, dass** die Ca-Fällung nach der Schwermetallfällung ohne vorherige fest-flüssig Trennung der ausgefällten Schwermetalle durchgeführt wird und dass die entstehende Suspension dann durch Co-Sedimentation von Schwermetallen und Calciumsalzen in eine flüssige und eine feste Phase separiert wird.

18. Verfahren nach einem der Ansprüche 1 bis 17, **dadurch gekennzeichnet, dass** Schritt c) weiters das Ausfällen von Lithium als Li₂CO₃ umfasst, wobei als Fällungsmittel bevorzugt Carbonate verwendet werden, die eine größere Löslichkeit als Li₂CO₃ aufweisen, insbesondere Na₂CO₃ oder K₂CO₃.

19. Verfahren nach einem der Ansprüche 1 bis 18, **dadurch gekennzeichnet, dass** Schritt c) nach dem Ausfällen von Schwermetallen und ggf. nach dem Ausfällen von Calcium weiters das Zusetzen oder Erzeugen eines starken Oxidationsmittels, umfasst, um Sulfid-Anionen (S²⁻) zu entfernen.

20. Verfahren nach Anspruch 19, **dadurch gekennzeichnet, dass** das Zusetzen oder Erzeugen des starken Oxidationsmittels nach der Sulfidfällung und vor dem Ausfällen von Calcium erfolgt.

21. Verfahren nach einem der Ansprüche 1 bis 20, **dadurch gekennzeichnet, dass** am Ende von Schritt c) eine starke Säure, insbesondere HCl zugesetzt wird, um den pH-Wert abzusenken.

22. Verfahren nach einem der Ansprüche 1 bis 21, **dadurch gekennzeichnet, dass** Abwärme aus dem Zementherstellungsprozess, insbesondere aus dem Vorwärmer oder dem Klinkerkühler bei der fraktionierten Kristallisation in Schritt d) zum Verdampfen der behandelten Sole und ggf. zur Trocknung des erhaltenen Salzes verwendet wird.

23. Verfahren nach Anspruch 22, **dadurch gekennzeichnet, dass** die Abwärme aus dem Zementherstellungsprozess, insbesondere dem Vorwärmer oder dem Zementkühler einer Dampferzeugung zugeführt wird und der Dampf zum Erwärmen und Verdampfen der behandelten Sole in Schritt d) verwendet wird, wobei' das verdampfte Wasser der Sole zumindest teilweise der Dampferzeugung zugeführt wird.

24. Verfahren nach einem der Ansprüche 1 bis 23, **dadurch gekennzeichnet, dass** das in Schritt d) verdampfte Wasser der Sole zumindest teilweise zum Aufschlämmen der Bypass-Stäube und/oder zum Aufschlämmen oder Auswaschen der im ersten und/oder einem weiteren Abtrennungsschritt abgetrennten Feststoffe verwendet wird.

## Claims

1. A method for processing and utilizing bypass dusts obtained during the production of cement, comprising the steps of
a) contacting the bypass dust with an aqueous phase and mixing the same to obtain a homogenous slurry, with water-soluble components of the bypass dust being dissolved in the aqueous phase,
b) carrying out a solid-liquid separation, in particular a vacuum filtration or a filter press filtration, to separate the solids contained in the slurry, with a brine remaining,
c) separating heavy metals present in the brine and precipitating calcium to obtain a processed brine,
d) subjecting the processed brine to a fractional crystallization.

2. A method according to claim 1, **characterized in that** the ratio of bypass dust to aqueous phase in step a) is 1:1 to 1:2.

3. A method according to claim 1 or 2, **characterized in that** HCl is added in step a).

4. A method according to claim 1, 2 or 3, **characterized in that** a first separation step is performed according to step b) to obtain a strong brine, which is fed to step c), and that the solids separated in the first separation step are slurried using an aqueous medium, wherein the water-soluble components of the solids are dissolved in the aqueous phase and the thus obtained slurry is subjected to at least a further separation step in which the solids contained in the slurry are separated and a weak brine remains.

5. A method according to any one of claims 1 to 4, **characterized in that** the first and/or the at least one further separation step comprises filtration.

6. A method according to claim 5, **characterized in that** said filtration is performed using a filter press.

7. A method according to claim 1, 2 or 3, **characterized in that** the solid-liquid separation according to step b) is performed by a continuous separation process, wherein the slurry and an aqueous phase are conducted in counter-flow, and contacted, in a continuously operating separation device, in particular a band filter or a vacuum band filter.

8. A method according to claim 7, **characterized in that** a weak brine is withdrawn upon passage through a first section of the continuous separation device, and a strong brine is withdrawn upon passage through a further section of the continuous separation device.

9. A method according to any one of claims 4 to 8, **characterized in that** the weak brine remaining after the second and/or the at least one further separation step, or withdrawn from the continuous separation device, is used for scurrying the bypass dust in step a), and/or for washing out or slurrying the filter cake resulting from the first or the at least one further separation step.

10. A method according to any one of claims 1 to 9, **characterized in that** the separated solids, after optionally required drying, are returned into the cement production process, in particular as cement grinding additive or as raw meal components.

11. A method according to any one of claims 1 to 10, **characterized in that** in step c) a precipitant comprised, in particular, of CO₂ or carbonates, in particular alkali carbonates such as Na₂CO₃ or K₂CO₃, is added to the brine for precipitating calcium salts, in particular CaCO₃.

12. A method according to claim 11, **characterized in that** CO₂-containing exhaust gas is withdrawn from the kiln and used as precipitant in step c).

13. A method according to any one of claims 1 to 12, **characterized in that** the calcium salt precipitated in step c) is added to the slurry in step a) and separated as a solid in step b).

14. A method according to any one of claims 1 to 13, **characterized in that** the separation of heavy metals is performed by sulfide precipitation.

15. A method according to claim 14, **characterized in that** Na₂S is used as precipitant for the sulfide precipitation.

16. A method according to any one of claims 1 to 15, **characterized in that** the precipitation of calcium salts, in particular CaCO₃, takes place after the precipitation of the heavy metals.

17. A method according to claim 16, **characterized in that** the precipitation of Ca is performed after the heavy-metal precipitation without previous solid-liquid separation of the precipitated heavy metals, and that the formed suspension is then separated into a liquid and a solid phase by the co-sedimentation of heavy metals and calcium salts.

18. A method according to any one of claims 1 to 17, **characterized in that** step c) further comprises the precipitation of lithium as Li₂CO₃, wherein carbonates are preferably used as precipitants, having a higher solubility than Li₂CO₃, in particular Na₂CO₃ or K₂CO₃.

19. A method according to any one of claims 1 to 18, **characterized in that** step c) after the precipitation of heavy metals, and optionally after the precipitation of calcium, further comprises the addition or preparation of a strong oxidant to remove sulfide anions (S²⁻).

20. A method according to claim 19, **characterized in that** the addition or preparation of the strong oxidant is performed after the precipitation of sulfides and prior to the precipitation of calcium.

21. A method according to any one of claims 1 to 20, **characterized in that** a strong acid, in particular HCl, is added at the end of step c) to lower the pH.

22. A method according to any one of claims 1 to 21, **characterized in that** waste heat from the cement production process, in particular from the preheater or the clinker cooler, is used in the fractional crystallization in step d) for evaporating the processed brine, and optionally for drying the obtained salt.

23. A method according to claim 22, **characterized in that** the waste heat from the cement production process, in particular the preheater or the cement cooler, is supplied to vapor generation and the vapor is used for heating and evaporating the processed brine in step d), the evaporated water of the brine being at least partially supplied to said vapor generation.

24. A method according to any one of claims 1 to 23, **characterized in that** the water evaporated in step d), of the brine is at least partially used for slurrying the bypass dusts and/or for slurrying or washing out the solids separated in the first and/or a further separation steps.

## Revendications

1. Procédé pour le traitement et l'utilisation de poussières de dérivation provenant du processus de production de ciment, comprenant les étapes
a) mettre la poussière de dérivation en contact avec une phase aqueuse et mélanger celles-ci afin d'obtenir une suspension homogène, des composantes solubles dans l'eau de la poussière de dérivation étant alors dissolues dans la phase aqueuse,
b) effectuer une séparation solide/liquide, notamment un filtrage à vide ou un filtrage à l'aide d'un filtre-presse, afin de séparer les matières solides contenues dans la suspension, restant alors une saumure,
c) séparer des métaux lourds contenus dans la saumure et précipitation de calcium, afin d'obtenir une saumure traitée,
d) soumettre la saumure traitée à une cristallisation fractionnée.

2. Procédé selon la revendication 1, **caractérisé en ce que** le rapport de poussière de dérivation à phase aqueuse à l'étape a) est de 1 : 1 à 1 : 2.

3. Procédé selon la revendication 1 ou 2, **caractérisé en ce qu'**il est ajouté, à l'étape a), du HCl.

4. Procédé selon la revendication 1, 2 ou 3, **caractérisé en ce qu'**il est effectué une première étape de séparation selon l'étape b) afin d'obtenir une saumure forte laquelle est acheminée à l'étape c) et **en ce que** les matières solides séparées sont mises en suspension à l'aide d'un médium aqueux, les composantes solubles dans l'eau des matières solides étant alors dissolues dans la phase aqueuse, et la suspension ainsi obtenue est soumise à au moins une étape de séparation supplémentaire dans laquelle les matières solides contenues dans la suspension sont séparées et qu'il reste une saumure faible.

5. Procédé selon l'une des revendications 1 à 4, **caractérisé en ce que** la première et/ou ladite au moins une étape de séparation supplémentaire comprend un filtrage.

6. Procédé selon la revendication 5, **caractérisé en ce que** le filtrage est effectué à l'aide d'un filtre-presse.

7. Procédé selon la revendication 1, 2 ou 3, **caractérisé en ce que** la séparation solide/liquide selon l'étape b) est effectuée à l'aide d'un processus de séparation continu, la suspension et une phase aqueuse étant conduites et mises en contact à contre-courant dans un dispositif de séparation travaillant en continu, notamment un filtre à bande ou un filtre à bande à vide.

8. Procédé selon la revendication 7, **caractérisé en ce que**, après le passage dans une première partie du dispositif de séparation, une saumure faible est extraite et qu'après le passage dans une autre partie du dispositif de séparation continu, une saumure forte est extraite.

9. Procédé selon l'une des revendications 4 à 8, **caractérisé en ce que** la saumure faible restant après la deuxième et/ou au moins une autre étape de séparation ou étant extraite du dispositif de séparation continu, est utilisée pour la mise en suspension de la poussière de dérivation à l'étape a) et/ou pour un lavage ou une mise en suspension du gâteau de filtrage se formant pendant la première ou au moins une autre étape de séparation.

10. Procédé selon l'une des revendications 1 à 9, **caractérisé en ce que** les matières solides séparées sont reconduites, après un séchage éventuellement nécessaire, dans le processus de fabrication de ciment, notamment comme additif broyé au ciment ou comme composante brute de poudre.

11. Procédé selon l'une des revendications 1 à 10, **caractérisé en ce qu'**il est ajouté à la saumure, à l'étape c), une matière de précipitation, notamment CO₂ ou des carbonates, notamment des carbonates alcalins tels que Na₂CO₃ ou K₂CO₃, pour la précipitation de sels de calcium, notamment de CaCO₃.

12. Procédé selon la revendication 11, **caractérisé en ce qu'**un gaz d'échappement contenant du CO₂ est extrait du fourneau et est utilisé à l'étape c) comme matière de précipitation.

13. Procédé selon l'une des revendications 1 à 12, **caractérisé en ce que** le sel de calcium précipité à l'étape c) est ajouté à la suspension à l'étape a) et est séparé comme matière solide à l'étape b).

14. Procédé selon l'une des revendications 1 à 13, **caractérisé en ce que** la séparation de métaux lourds est effectuée à l'aide d'une séparation de sulfure.

15. Procédé selon la revendication 14, **caractérisé en ce qu'**il est utilisé comme matière de précipitation pour la séparation de sulfure, du Na₂S.

16. Procédé selon l'une des revendications 1 à 15, **caractérisé en ce que** la précipitation de sels de calcium, notamment de CaCO₃, est effectuée après la précipitation des métaux lourds.

17. Procédé selon la revendication 16, **caractérisé en ce que** la précipitation de calcium est effectuée après la précipitation de métaux lourds sans séparation solide/liquide préalable des métaux lourds précipités et **en ce que** la suspension qui se forme est séparée en une phase liquide et une phase solide par co-sédimentation de métaux lourds et de sels de calcium.

18. Procédé selon l'une des revendications 1 à 17, **caractérisé en ce que** l'étape c) comprend en outre la précipitation de lithium sous la forme de Li₂CO₃, étant alors utilisés comme matière de précipitation de préférence des carbonates qui présentent une plus grande solubilité que le Li₂CO₃, notamment Na₂CO₃ ou K₂CO₃.

19. Procédé selon l'une des revendications 1 à 18, **caractérisé en ce que** l'étape c) comprend en outre, après la précipitation de métaux lourds et, le cas échéant, après la précipitation de calcium, l'ajout ou la production d'un moyen d'oxydation fort, pour éliminer des anions de sulfure (S²⁻).

20. Procédé selon la revendication 19, **caractérisé en ce que** l'ajout ou la production d'un moyen d'oxydation fort est effectué après la précipitation de sulfure et avant la précipitation de calcium.

21. Procédé selon l'une des revendications 1 à 20, **caractérisé en ce que**, à la fin de l'étape c), un acide fort, notamment HCl, est ajouté afin d'abaisser la valeur pH.

22. Procédé selon l'une des revendications 1 à 21, **caractérisé en ce que** la chaleur dégagée du processus de fabrication de ciment, notamment du préchauffeur ou du refroidisseur de clinker, est utilisée lors de la cristallisation fractionnée à l'étape d) pour évaporer la saumure traitée et, le cas échéant, pour le séchage du sel obtenu.

23. Procédé selon la revendication 22, **caractérisé en ce que** la chaleur dégagée du processus de fabrication de ciment, notamment du préchauffeur ou du refroidisseur de ciment, est acheminée à une production de vapeur et **en ce que** la vapeur est utilisée à l'étape d) pour réchauffer et faire évaporer la saumure traitée, l'eau évaporée de la saumure étant acheminée au moins partiellement à la production de vapeur.

24. Procédé selon l'une des revendications 1 à 23, **caractérisé en ce que** l'eau évaporée à l'étape d) est utilisée au moins partiellement pour mettre les poussières de dérivation en suspension et/ou pour mettre en suspension ou laver les matières solides séparées à la première et/ou à une autre étape de séparation.
